# EUROPEAN PATENT APPLICATION

(11) **EP 4 740 929 A1**
(43) Date of publication of application: **13.05.2026**
(21) Application number: 24835841.8
(22) Date of filing: 06.06.2024
(51) Int. Cl.: A61J 3/07

(54) **SEPARATION FAILURE CAPSULE REMOVAL MECHANISM**

(30) Priority: 03.07.2023 JP 2023109402
(71) Applicant: Qualicaps Co., Ltd., Nara 639-1032 (JP)
(72) Inventor: KIMURA, Yu, Yamatokoriyama-shi, Nara 639-1032 (JP)
(74) Representative: Isarpatent
(86) International application number: PCT/JP2024/020661
(87) International publication number: WO 2025/009322

(57) **Abstract**

A separation failure capsule removal mechanism 1 in which a separation failure capsule 50 is removed from a cap conveyance body 100, including: a push-up unit 10 that is arranged below the conveyance main body 101, and engages a capsule body 51 of a separation failure capsule 50 to push up the separation failure capsule 50; and a pull-up unit 20 that pulls up the separation failure capsule 50 from a pocket 102, the separation failure capsule 50 having been pushed up by the push-up unit 10 and protruding above the conveyance main body 101, wherein the pull-up unit 20 includes a pull-up roller on which a nip groove 21 is formed along a circumferential direction of an outer peripheral surface, the nip groove 21 being configured to nip a capsule cap 51 of the separation failure capsule 50.

## Description

### Technical Field

The present invention relates to a separation failure capsule removal mechanism.

### Background Art

A capsule filling machine fills a capsule with a filling material such as powder, granules, or a highly viscous liquid. In the configuration thereof, when an empty capsule into which a cap and a body are temporarily coupled is supplied, separation between the cap and the body, filling the body with a filling material, and coupling between the cap and the body are sequentially performed during the empty capsule being conveyed.

The cap and the body are generally separated by vacuum suction. However, due to factors such as weak vacuum suction force or strong coupling force between the cap and the body, the cap is sometimes not appropriately separated from the body so that a separation failure capsule is conveyed. The separation failure capsule cannot be filled with a filling material, and therefore needs to be removed from the conveyance path.

As a conventional separation failure capsule removal mechanism, Patent Literature 1 discloses a capsule filling machine having a cap holder to hold a cap separated from the body. In the configuration thereof, when a detector detects that a separation failure capsule is contained among caps being conveyed by the cap holder, the separation failure capsule is pushed up by a push-up plate from below the holder, and removed by vacuum suction from above the holder.

### Citation List

### Patent Literature

Patent Literature 1: JP 55-146161 A

### Summary of Invention

### Technical Problem

The separation failure capsule removal mechanism disclosed in Patent Literature 1 has a problem that: when a separation failure capsule is pushed up by a push-up plate from the holder and subjected to vacuum suction, weak suction force may fail to suction the separation failure capsule, but strong suction force may remove even an appropriately separated cap; and therefore, the settings of vacuum suction force easily become complicated to appropriately remove only separation failure capsules.

Therefore, an object of the present invention is to provide a separation failure capsule removal mechanism capable of easily and reliably removing separation failure capsules.

### Solution to Problem

The object of the present invention can be achieved by: a separation failure capsule removal mechanism in which a cap conveyance body has a plurality of pockets vertically penetrating a conveyance main body, each of the pockets being configured to hold a capsule cap separated from a capsule body, and conveys the capsule cap; and when a separation failure capsule, in which a capsule cap and a capsule body are not separated from each other, is held in the pocket, the capsule body protruding below the conveyance main body, the separation failure capsule is removed from the cap conveyance body, the separation failure capsule removal mechanism including: a push-up unit that is arranged below the conveyance main body, and engages a capsule body of a separation failure capsule to push up the separation failure capsule; and a pull-up unit that pulls up the separation failure capsule from the pocket, the separation failure capsule having been pushed up by the push-up unit and protruding above the conveyance main body, wherein the pull-up unit includes a pull-up roller on which a nip groove is formed along a circumferential direction of an outer peripheral surface, the nip groove being configured to nip a capsule cap of the separation failure capsule.

In the separation failure capsule removal mechanism, preferably, the push-up unit includes an inclined portion that is an inclined surface inclining upward along a conveying direction of the cap conveyance body; and preferably, the separation failure capsule is conveyed along the inclined portion and pushed up by sliding a lower end of the capsule body on the inclined portion, and the capsule cap protrudes above the conveyance main body.

Optionally, the pull-up unit is rotationally driven by friction between the outer peripheral surface of the pull-up unit and an upper surface of the conveyance main body. Alternatively, optionally, the pull-up unit is rotationally driven independently of the cap conveyance body so that a peripheral speed of the outer peripheral surface of the pull-up unit is higher than a conveying speed of the conveyance main body.

Preferably, a groove width of the nip groove is 90 to 95% of a diameter of the capsule cap of the separation failure capsule.

Preferably, the separation failure capsule removal mechanism further includes a recovery unit configured to separate and recover the separation failure capsule from the pull-up unit, the separation failure capsule having been pulled up by the pull-up unit. Preferably, the recovery unit includes a raking member that rakes the separation failure capsule from the nip groove, the separation failure capsule having been pulled up from the pocket by the pull-up unit.

Preferably, the separation failure capsule removal mechanism further includes a pressing unit that presses the separation failure capsule between the pressing unit and the push-up unit, the separation failure capsule having been pushed up by the push-up unit. Advantageous Effects of Invention

The separation failure capsule removal mechanism of the present invention is capable of easily and reliably removing separation failure capsules.

### Brief Description of Drawings

FIG. 1 is a plan view of a separation failure capsule removal mechanism according to an embodiment of the present invention.
FIG. 2 is a perspective view including the A-A cross section of the separation failure capsule removal mechanism illustrated in FIG. 1.
FIG. 3 is an A-A cross-sectional view of the separation failure capsule removal mechanism illustrated in FIG. 1.
FIG. 4 is an enlarged view of a main part of the separation failure capsule removal mechanism illustrated in FIG. 1.
FIG. 5 is a cross-sectional view of a separation failure capsule removal mechanism according to another embodiment of the present invention.
FIG. 6 is a cross-sectional view of a separation failure capsule removal mechanism according to still another embodiment of the present invention.
FIG. 7 is a cross-sectional view of a separation failure capsule removal mechanism according to still another embodiment of the present invention.
FIG. 8 is a plan view of a separation failure capsule removal mechanism according to still another embodiment of the present invention.

### Description of Embodiments

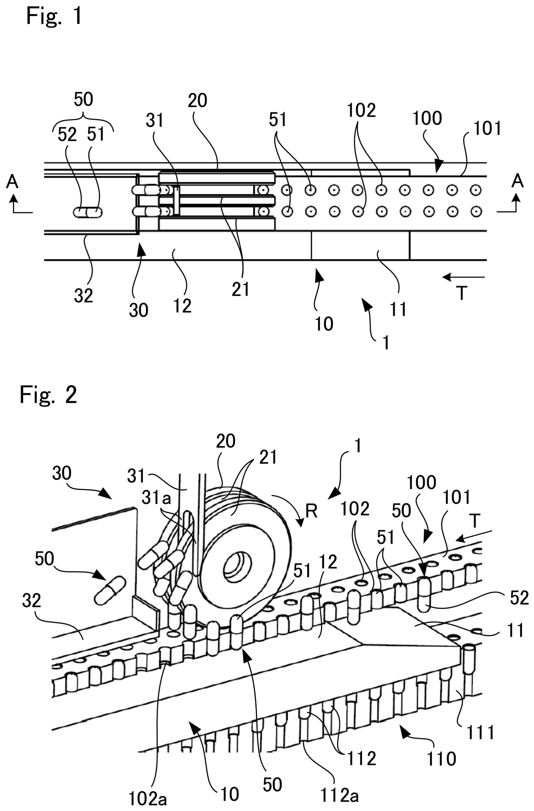

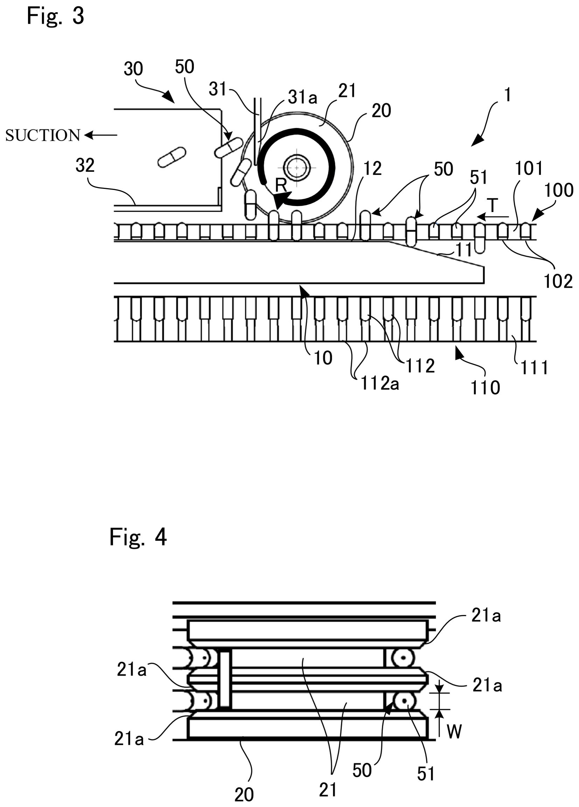

Hereinafter, embodiments of the present invention will be described with reference to the accompanying drawings. FIG. 1 is a plan view of a separation failure capsule removal mechanism according to an embodiment of the present invention. FIG. 2 is a perspective view including the A-A cross section of the separation failure capsule removal mechanism illustrated in FIG. 1. FIG. 3 is an A-A cross-sectional view of the separation failure capsule removal mechanism illustrated in FIG. 1. The separation failure capsule removal mechanism 1 illustrated in FIGS. 1 to 3 includes a capsule filling machine in which a temporary couple of a capsule cap 51 and a capsule body 52 is separated and then the capsule body 52 is filled with a filling material. In the mechanism, when a separation failure capsule 50 is mixed among separated capsule caps 51 that are conveyed by a cap conveyance body 100, the separation failure capsule 50 is removed from the cap conveyance body 100.

In the cap conveyance body 100, a plurality of pockets 102 is formed in two rows along the longitudinal direction of the belt-shaped conveyance main body 101, and the capsule cap 51 separated from the capsule body 52 is held in each pocket 102 and horizontally conveyed in the direction of an arrow T. Each pocket 102 is formed in a cylindrical shape so as to vertically penetrate the conveyance main body 101. Each pocket 102 has a size-reduced step 102a formed at the lower edge thereof, and the capsule cap 51 is held therein such that the lower end thereof is in contact with the step 102a. In the cap conveyance body 100, the number of rows of the pockets 102 is not particularly limited, and may be single or three or more.

Below the cap conveyance body 100, a body conveyance body 110 is arranged. The body conveyance body 110 has a main body 111 extending in parallel with the conveyance main body 101 of the cap conveyance body 100, a plurality of holders 112 is formed in two rows along the longitudinal direction of the main body 111, and the capsule body 52 is held in each holder 112 and conveyed in the same direction as that of the cap conveyance body 100. At the bottom of the holder 112, a suction port 112a is formed.

The cap conveyance body 100 and the body conveyance body 110 become close to each other at a location (not illustrated), and convey the temporarily coupled capsule cap 51 and capsule body 52 each held in the pocket 102 and the holder 112, and the capsule body 52 is subjected to vacuum suction via the suction port 112a so that the capsule cap 51 and the capsule body 52 are separated, and then the cap conveyance body 100 and the body conveyance body 110 become apart from each other.

FIGS. 1 to 3 illustrate a location in the capsule filling machine where the cap conveyance body 100 and the body conveyance body 110 are apart from each other after the capsule cap 51 and the capsule body 52 are separated. The pocket 102 of the cap conveyance body 100 normally holds the capsule cap 51 separated from the capsule body 52. However, when the capsule body 52 is not separated from the capsule cap 51 through vacuum suction, the separation failure capsule 50 in which the capsule cap 51 and the capsule body 52 remain coupled is held and conveyed in the pocket 102 such that the capsule body 52 protrudes below the conveyance main body 101.

As illustrated in FIGS. 1 to 3, the separation failure capsule removal mechanism 1 according to the embodiment includes: a push-up unit 10 that is arranged below the conveyance main body 101 of the cap conveyance body 100, and pushes up the separation failure capsule 50; a pull-up unit 20 that pulls up the separation failure capsule 50 having been pushed up by the push-up unit 10 and protruding above the conveyance main body 101; and a recovery unit 30 configured to recover the separation failure capsule 50 having been pulled up by the pull-up unit 20.

The push-up unit 10 is formed in a block shape, and has an inclined portion 11 and a support portion 12 formed on its upper surface. The inclined portion 11 is an inclined surface inclining upward along the conveying direction T of the cap conveyance body 100, and formed to have a height at which the capsule body 52 of the separation failure capsule 50 conveyed by the cap conveyance body 100 engages. The separation failure capsule 50 is conveyed along the inclined portion 11 by the cap conveyance body 100 and pushed up by sliding the lower end of the capsule body 52 on the inclined portion 11, and the capsule cap 51 protrudes above the conveyance main body 101.

The support portion 12 is a horizontal plane formed on the downstream side of the inclined portion 11 in the conveying direction of the cap conveyance body 100, and the lower end of the capsule body 52 slides on the support portion 12 so that the capsule cap 51 keeps protruding above the conveyance main body 101.

The pull-up unit 20 includes a pull-up roller that rotates around a horizontal axis orthogonal to the conveying direction T of the cap conveyance body 100, and is arranged to face the support portion 12 via the cap conveyance body 100. The outer peripheral surface of the pull-up unit 20 is in contact with the upper surface of the conveyance main body 101, and rotationally driven in the direction of an arrow R by friction with the conveyance main body 101 moving along the conveying direction T. The pull-up unit 20 according to the embodiment needs no drive source separately provided for rotational driving, and is reduced in manufacturing cost. However, the pull-up unit 20 may be configured to be rotationally driven independently of the cap conveyance body 100 with a drive source other than the drive source of the cap conveyance body 100. In this case, the peripheral speed of the outer peripheral surface of the pull-up unit 20 is preferably higher than the conveying speed of the conveyance main body 101, by which the pull-up unit 20 as described later more reliably pulls up the separation failure capsule 50.

The pull-up unit 20 has a nip groove 21 formed along the circumferential direction of the outer peripheral surface. A plurality of nip grooves 21 is formed to correspond to each row of the pockets 102 formed in the conveyance main body 101, and nips the capsule cap 51 of the separation failure capsule 50 pushed up above the conveyance main body 101 by the push-up unit 10 and pulls up the separation failure capsule 50 from the pocket 102. The depth of the nip groove 21 is not particularly limited as long as the capsule cap 51 can be reliably nipped.

The recovery unit 30 includes: a plate-shaped raking member 31 that rakes the separation failure capsule 50 from the nip groove 21, the separation failure capsule 50 having been pulled up by the rotation of the pull-up unit 20; and a recovery box 32 to which the separation failure capsule 50 raked by the raking member 31 is recovered. The raking member 31 has a spatula-shaped insertion unit 31a whose lower portion branches and is inserted into each of the plurality of nip grooves 21, and the separation failure capsule 50 nipped by the nip groove 21 is raked and separated from the pull-up unit 20 such that the separation failure capsule 50 is pushed back by the insertion unit 31a through the rotation of the pull-up unit 20.

The recovery box 32 is arranged to be adjacent to the downstream side of the pull-up unit 20 in the conveying direction of the cap conveyance body 100, and holds the separation failure capsule 50 raked by the raking member 31. As illustrated in FIG. 3, the recovery box 32 can more reliably recover the separation failure capsule 50 by suction such as vacuum suction or the like from the opposite side of the raking member 31. However, the suction to the recovery box 32 is not essential, and the separation failure capsule 50 can be recovered to the recovery box 32 without suction.

In the separation failure capsule removal mechanism 1 including the above configurations, when the capsule cap 51 is correctly held and conveyed in the pocket 102 of the cap conveyance body 100, the capsule cap 51 remains held in the pocket 102 without being pushed up by the push-up unit 10, and passes by the pull-up unit 20 and the recovery unit 30.

On the other hand, when the separation failure capsule 50 is held in the pocket 102 of the cap conveyance body 100, the separation failure capsule 50 is pushed up by the push-up unit 10 during conveyance, and the capsule cap 51 of the separation failure capsule 50 protruding from the cap conveyance body 100 is nipped by the nip groove 21 of the pull-up unit 20, thereby pulling up the separation failure capsule 50 from the pocket 102.

As described above, the separation failure capsule 50 is physically nipped by the pull-up unit 20 so that there is no need of precise adjustment of vacuum suction force as in the conventional technique, where separation failure capsules are removed by vacuum suction, and the separation failure capsule 50 can be easily and reliably removed. In addition, since the separation failure capsule 50 conveyed along the inclined portion 11 of the push-up unit 10 is automatically pushed up by the lower end of the capsule body 52 sliding on the inclined portion 11, no detector is needed to detect the separation failure capsule 50, and thereby the manufacturing cost can be reduced. Similarly to the conventional capsule filling machines, after the capsule cap 51 and the capsule body 52 pass through the separation failure capsule removal mechanism 1, a filling material is filled in the capsule body 52, and then they are coupled.

FIG. 4 is an enlarged view of the pull-up unit 20 illustrated in FIG. 1. As illustrated in FIG. 4, when each of the nip grooves 21 is subjected to chamfering, fillet, or the like on the opening edge 21a, the capsule cap 51 of the separation failure capsule 50 can be smoothly nipped, and positional deviation in the width direction of the nip groove 21 with respect to the separation failure capsule 50 can be easily tolerated. The groove width S of the nip groove 21 is preferably smaller than the diameter of the capsule cap 51 of the separation failure capsule 50 so that the separation failure capsule 50 can be reliably nipped. However, if the groove width S of the nip groove 21 is excessively small, the nipped capsule cap 51 deforms excessively. Therefore, the groove width S of the nip groove 21 is preferably 90 to 95% of the diameter of the capsule cap 51 of the separation failure capsule 50.

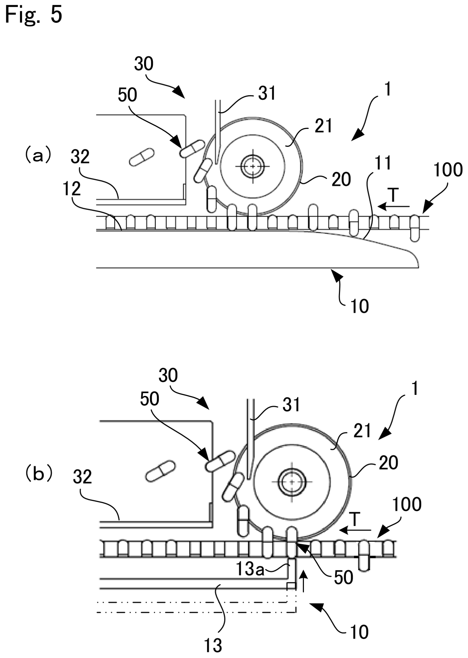

Although an embodiment of the present invention has been described in detail above, specific embodiments of the present invention are not limited to the above embodiment. For example, in the push-up unit 10 according to the embodiment, the inclined portion 11 is formed in a planar shape, but the inclined portion 11 may have a curved surface shape as illustrated in FIG. 5 (a). The support portion 12 formed as a horizontal plane is not necessarily required. For example, the separation failure capsule 50 being conveyed on the inclined portion 11 may be nipped and pulled up by the nip groove 21 of the pull-up unit 20.

As illustrated in FIG. 5 (b), the push-up unit 10 may have a rod-like pusher 13 that moves vertically by a lifting device (not illustrated), instead of the inclined portion 11. The tip 13a of the pusher 13 is formed so that the tip 13a can be inserted from below to the pocket 102 of the cap conveyance body 100, and when the separation failure capsule 50 is detected by a sensor (not illustrated), the pusher 13 can be raised to push the separation failure capsule 50 into the nip groove 21 of the pull-up unit 20. The pusher 13 is not necessarily inserted into the pocket 102, and may be, for example, a plate-like or column-like member that can push up the separation failure capsule 50 from below. Note that, in FIG. 5, the same components as those in FIG. 3 and the like are denoted by the same reference signs (the same applies to the following drawings).

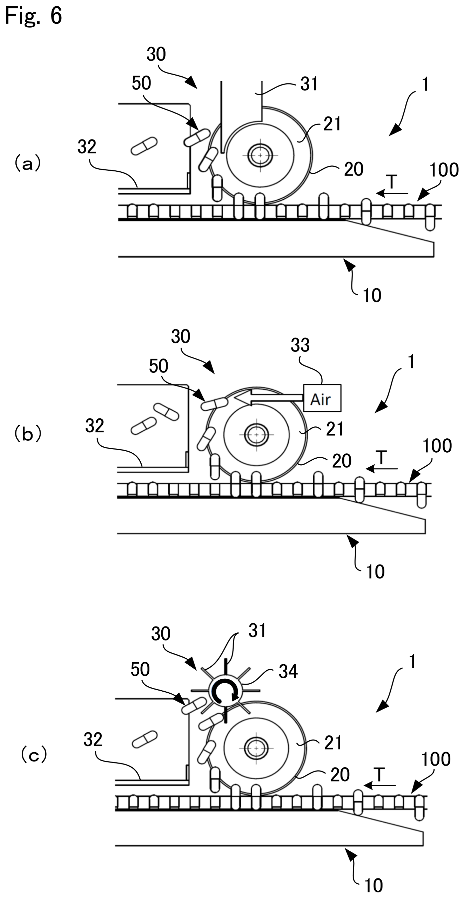

As illustrated in FIG. 6 (a), the raking member 31 included in the recovery unit 30 may be formed in a block shape having a constant width in the conveying direction T of the cap conveyance body 100 (for example, a width that covers the bottom surface of the nip groove 21 by about 1/4 in the circumferential direction), so that the raking member 31 is improved in strength, and the separation failure capsule 50 can be more reliably recovered.

As illustrated in FIG. 6 (b), the recovery unit 30 may include an air injection unit 33 that injects high pressure air toward the recovery box 32 to guide the separation failure capsule 50 to the recovery box 32. Alternatively, as illustrated in FIG. 6 (c), a plurality of raking members 31 may be provided radially on the outer peripheral surface of a rotating body 34 so that the rotating body 34 rotates to allow the raking members 31 to rake the separation failure capsule 50 from the pull-up unit 20. When the recovery unit 30 is provided, the separation failure capsule 50 having been pulled up by the pull-up unit 20 can be automatically recovered. Alternatively, the separation failure capsule 50 having been pulled up by the pull-up unit 20 can be manually recovered, without providing the recovery unit 30.

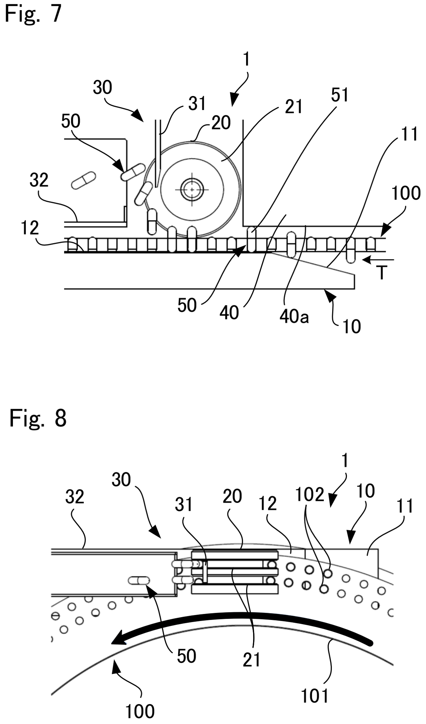

As illustrated in FIG. 7, the separation failure capsule removal mechanism 1 may further include a pressing unit 40 that presses the separation failure capsule 50 between the pressing unit 40 and the push-up unit 10, the separation failure capsule 50 having been conveyed by the cap conveyance body 100 and pushed up by the inclined portion 11 of the push-up unit 10. The pressing unit 40 is a block-shaped member arranged to be adjacent to the pull-up unit 20 on the upstream side in the conveying direction of the cap conveyance body 100, and has a pressing surface 40a, on which the capsule cap 51 of the separation failure capsule 50 slides, on the lower side thereof. According to the configuration, the separation failure capsule 50 is pressed and nipped by the push-up unit 10 and the pressing unit 40 so that the coupling force between the capsule cap 51 and the capsule body 52 increases. Therefore, there is no risk that the pull-up unit 20 pulls up only the capsule cap 51 of the separation failure capsule 50, and the separation failure capsule 50 can be more reliably removed.

The separation failure capsule removal mechanism 1 according to the embodiment is applied to the cap conveyance body 100, by which the separation failure capsule 50 is linearly conveyed. However, the separation failure capsule removal mechanism 1 including the same configurations as those in the embodiment can be applied to a ring-shaped cap conveyance body 100, where the separation failure capsule 50 is rotationally conveyed in the arrow direction. The separation failure capsule removal mechanism of the present invention can be suitably applied to a continuous conveyance type cap conveyance body, and can be applied to an intermittent conveyance type cap conveyance body.

### Reference Signs List

- 1: separation failure capsule removal mechanism
- 10: push-up unit
- 11: inclined portion
- 20: pull-up unit (pull-up roller)
- 21: nip groove
- 30: recovery unit
- 31: raking member
- 40: pressing unit
- 50: separation failure capsule
- 51: capsule cap
- 52: capsule body
- 100: cap conveyance body
- 101: conveyance main body
- 102: pocket

## Claims

1. A separation failure capsule removal mechanism in which a cap conveyance body has a plurality of pockets vertically penetrating a conveyance main body, each of the pockets being configured to hold a capsule cap separated from a capsule body, and conveys the capsule cap; and when a separation failure capsule, in which a capsule cap and a capsule body are not separated from each other, is held in the pocket, the capsule body protruding below the conveyance main body, the separation failure capsule is removed from the cap conveyance body,
the separation failure capsule removal mechanism comprising:
a push-up unit that is arranged below the conveyance main body, and engages a capsule body of a separation failure capsule to push up the separation failure capsule; and
a pull-up unit that pulls up the separation failure capsule from the pocket, the separation failure capsule having been pushed up by the push-up unit and protruding above the conveyance main body,
wherein the pull-up unit includes a pull-up roller on which a nip groove is formed along a circumferential direction of an outer peripheral surface, the nip groove being configured to nip a capsule cap of the separation failure capsule.

2. The separation failure capsule removal mechanism according to claim 1, wherein the push-up unit includes an inclined portion that is an inclined surface inclining upward along a conveying direction of the cap conveyance body, and
the separation failure capsule is conveyed along the inclined portion and pushed up by sliding a lower end of the capsule body on the inclined portion, and the capsule cap protrudes above the conveyance main body.

3. The separation failure capsule removal mechanism according to claim 1, wherein the pull-up unit is rotationally driven by friction between the outer peripheral surface of the pull-up unit and an upper surface of the conveyance main body.

4. The separation failure capsule removal mechanism according to claim 1, wherein the pull-up unit is rotationally driven independently of the cap conveyance body so that a peripheral speed of the outer peripheral surface of the pull-up unit is higher than a conveying speed of the conveyance main body.

5. The separation failure capsule removal mechanism according to claim 1, wherein a groove width of the nip groove is 90 to 95% of a diameter of the capsule cap of the separation failure capsule.

6. The separation failure capsule removal mechanism according to claim 1, further comprising a recovery unit configured to separate and recover the separation failure capsule from the pull-up unit, the separation failure capsule having been pulled up by the pull-up unit.

7. The separation failure capsule removal mechanism according to claim 6, wherein the recovery unit includes a raking member that rakes the separation failure capsule from the nip groove, the separation failure capsule having been pulled up from the pocket by the pull-up unit.

8. The separation failure capsule removal mechanism according to claim 1, further comprising a pressing unit that presses the separation failure capsule between the pressing unit and the push-up unit, the separation failure capsule having been pushed up by the push-up unit.
